# EUROPEAN PATENT SPECIFICATION

(11) **EP 0 774 547 B1**
(45) Date of publication and mention of the grant of the patent: **04.04.2001**
(21) Application number: 95927961.3
(22) Date of filing: 03.08.1995
(51) Int. Cl.: E02F 9/22, E02F 9/24

(54) **VALVE APPARATUS FOR PREVENTING THE COLLAPSE OF A WORKING MACHINE**
VENTILEINRICHTUNG ZUR VERHINDERUNG DES ZUSAMMENFALLENS EINES BAUMASCHINEN-ARBEITSWERKZEUGES
APPAREIL A SOUPAPES EMPECHANT L'ECROULEMENT D'UN ENGIN DE TERRASSEMENT

(30) Priority: 05.08.1994 JP 18449294
(43) Date of publication of application: 21.05.1997
(73) Proprietor: KOMATSU LTD., Minato-ku, Tokyo 107 (JP)
(72) Inventor: HORI, Shuji, Oyama Factory, K K Komatsu Seisakusho, Tochigi-ken 323 (JP); KARAKAMA, Tadao, Oyama Factory, Oyama-sho, Tochigi-ken 323 (JP)
(74) Representative: Grünecker, Kinkeldey, Stockmair & Schwanhäusser Anwaltssozietät
(86) International application number: PCT/JP95/01545
(87) International publication number: WO 96/04431

(56) References cited:
- JP-A- 1 169 105
- JP-U- 3 073 713

## Description

### TECHNICAL FIELD

This invention relates to a working machine fall preventive valve apparatus. More particularly, the present invention is concerned with a working machine fall preventive valve apparatus for preventing a fall of any component of the working machine when a failure occurs in a hydraulic circuit for delivering a pressure fluid to a hydraulic cylinder for the operation of that working machine component in a construction machine such as a hydraulic excavating machine.

### BACKGROUND ART

In general, a known hydraulic excavating machine has a construction in which a vehicle body has a boom mounted thereon by a boom cylinder so that the boom may be swung up and down, and the boom has an arm mounted thereto by an arm cylinder so that the arm may be swung up and down, the arm having a bucket swingingly secured thereto.

A hydraulic circuit for delivering a pressure discharge fluid from a hydraulic pump to the respective cylinders in such a hydraulic excavating machine is provided in the discharge paths of the hydraulic pump with a directional control valve for the boom, a directional control valve for the arm and a directional control valve for the bucket. And each such directional control valve has been constructed to be switchingly operable so that a communication between the respective control passages for delivering the controlled fluid pressures correspondingly to the boom cylinder, the arm cylinder and the bucket cylinder on the one hand and the pump discharge paths on the other hand may selectively be established and blocked, thereby controlling an extending and a contracting operation of each such cylinder to control the behavior of each of the boom, the arm and the bucket.

With such a hydraulic circuit, each such cylinder is formed therein with a retention pressure producing chamber in which a retention pressure is developed in accordance with an external load such as the weight of the boom, the arm or the bucket. Such a retention pressure producing chamber is communicated with a corresponding directional control valve via a fluid passage so that when the corresponding directional control valve is set at a closed position, the chamber may act to maintain the fluid pressure between the chamber and the directional control valve substantially constant and to maintain the corresponding boom, arm or bucket at a predetermined position. If the fluid passage connecting between a given directional control valve and the retention pressure producing chamber of a corresponding cylinder is damaged in the state in which the boom, the arm or the bucket is held at a predetermined position in this manner, it will follow that the retention pressure in the retention pressure producing chamber is lowered so that the same cylinder may be contractively operated under an external load to cause the boom, the arm or the bucket supported thereby to spontaneously fall.

In order to overcome such a drop in the retention pressure within the retention pressure producing chamber under the operation of the hydraulic excavating machine, Japanese Unexamined Utility Model Publication No. Sho 57-22554 has proposed an arrangement in which the fluid passage connected between a directional control valve and the retention pressure producing chamber of a corresponding cylinder is provided with a working machine fall preventive valve apparatus having a check valve, a flow rate control valve and a safety valve. In such an arrangement, when the fluid passage is damaged, the check valve will act to prevent a retention pressure from flowing out of the retention pressure producing chamber of the cylinder so that a spontaneous fall of the boom due to the contraction of the cylinder under an external force may be avoided.

The check valve is used to allow the operating fluid to flow from the directional control valve into the retention pressure producing chamber and to prevent the operating fluid from flowing out of the retention pressure producing chamber into the directional control valve. The flow rate control valve will be held in a blocking state under a spring force and will be brought to a communicating state in response to an external signal when the cylinder is contractively operated so that the flow rate of the operating fluid from the retention pressure producing chamber into the directional control valve may be controlled based upon a command value of that external signal. When an impact force acts on the cylinder so that the pressure within the retention force producing chamber may abnormally be elevated, the safety valve will act to relieve the abnormally elevated pressure so that the latter may not damage the corresponding portion.

A mounting structure of a working machine fall preventive valve apparatus according to the preamble of claim 1 is disclosed in DE-A-3239930. The disclosed working machine fall preventive valve apparatus has a construction in which there are provided a check valve, a flow rate control valve and a safety valve in a valve body that is mounted to a cylinder.

In the working machine fall preventive valve apparatus shown in DE-A-3239930, the valve body has a cylinder port that is opening to a cylinder side mounting surface of the valve body. The safety valve is provided at the side of the cylinder side mounting surface. On the other hand, both the check valve and the flow rate control valve are provided at the side of a surface that is opposite to the cylinder side mounting surface of the valve body. The size measured from the mounting surface of the valve body to the said opposing surface, i. e. the size in height of mounting the safety valve, the check valve and the flow rate control valve is made somewhat greater than the sum of the maximum diameter of the safety valve and the maximum diameter of the check valve and the flow rate control valve.

Accordingly, in the state in which the valve body of the working machine fall preventive valve apparatus has been mounted on the cylinder, the said valve body is arranged to largely project from the surface on which it has been mounted on the cylinder. As a result, the swinging displacement of the cylinder relative to the cylinder mounted body may very likely cause the valve body to collide with the cylinder mounted body. The eventual result is therefore a reduced amount of the swinging displacement of the cylinder required.

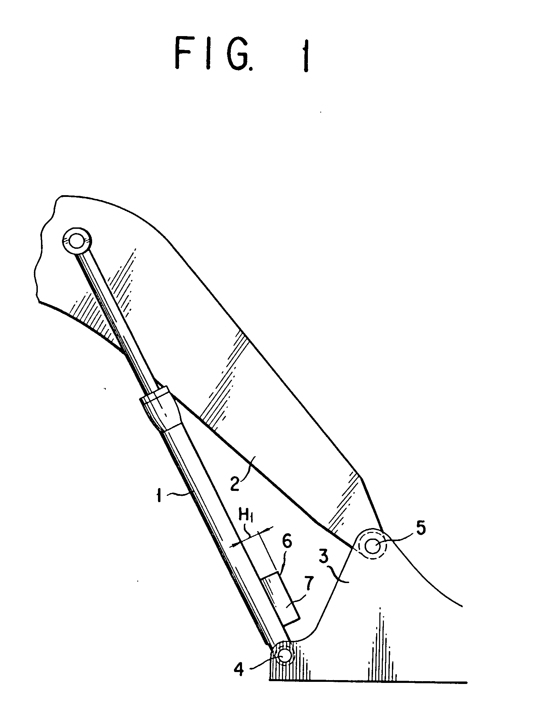

For example, with a hydraulic excavating machine as shown in Fig. 1 of the accompanying drawings hereof, a boom cylinder 1 and a boom 2 are shown as mounted on an upper vehicle body 3 at a pin 4 and at a pin 5, respectively, so that they may each be swingingly displaceable up and down whereas a valve body 7 of a working machine fall preventive valve apparatus 6 is shown as mounted on the cylinder 1 at a location closer to the pin 4. In such an arrangement, if the size in height H1 of mounting the valve body 7 is large, the valve body 7 will collide with the upper vehicle body 3 when the boom cylinder 1 is swingingly displaced upwards. The requirement that will then become due is therefore a reduced amount of the up and down swinging displacement of the boom cylinder 1.

On the other hand, in order for the boom 2 to be swingingly displaced up and down to a large extent, there is necessarily a requirement that the amount of the up and down swinging displacement of the boom cylinder 1 should be increased. In order to meet this demand, the prior art has adopted an arrangement in which the valve body 7 is mounted on the cylinder 1 at a location far from the pin 4 while a cylinder port of the said valve body and a port of the cylinder at the side of the fixed portion of a hydraulic circuit are connected together by means of a pipe line block or the like so that if the cylinder 1 is swingingly displaced largely, the valve body 7 may not collide with the upper vehicle body 3. Since the said valve body of the working machine fall preventive valve apparatus is then disposed spacedly from the pivotal point at the side of the pin 4, the result is then necessarily an unduly complicated hydraulic piping structure, as for instance at the pipe line block.

### SUMMARY OF THE INVENTION

It is accordingly a principal object of the present invention to provide a working machine fall preventive valve apparatus whereby the above mentioned problems can be resolved.

A further and yet more specific object of the present invention is to provide a working machine fall preventive valve apparatus that can be assembled to reduce its mounting size relative to a hydraulic cylinder.

In order to achieve the above mentioned as well as other than the above mentioned objects, there is provided in accordance with the present invention a working machine fall preventive valve apparatus comprising:
a cylinder side passage communicating with a cylinder port opening to a cylinder side mounting surface;
a valve body having a directional control valve side passage which is adapted to communicate with a directional control valve port;
a check valve provided in the said valve body for preventing a pressure fluid from flowing into the said directional control valve side passage from the said cylinder side passage;
a flow rate control valve provided in the said valve body to normally block a communication between the said directional control valve side passage and the said cylinder side passage and responsive to an external signal for establishing the said communication;
and a safety valve provided in the said valve body for relieving a pressure in the said cylinder side passage,
and characterized in that the said check valve, the said flow rate control valve and the said safety valve are disposed in a given plane that is substantially in parallel to the said cylinder side mounting surface.

It should be noted at this point that it is preferred that the said flow rate control valve comprise a spool fittedly inserted in a spool bore so that it may be slidable therein over a communicating position and a blocking position, that the said spool when energized by a plurality of springs may be held at the said blocking position and that the said spool under a pilot fluid pressure may be thrust to the said communicating position and in which the said springs are so set that when the said pilot fluid pressure is low the said spool may have an increased amount of displacement with respect to a change in the said pilot pressure and when the said pilot fluid pressure exceeds a given value the said spool may have a reduced amount of displacement with respect to a change in the said pilot pressure.

Also, it is possible that the said flow rate control valve may comprise a spool fittedly inserted in a spool bore whereby the said spool is formed with a cone seat portion such that the communication between the said directional control valve side passage and the said cylinder side passage is blocked.

According to the above mentioned basic construction, it should be noted that by virtue of the fact that the said check valve, the said flow rate control valve and the said safety valve are disposed in a given plane that is substantially in parallel to the said cylinder side mounting surface, the size in height of mounting the said valve body is made commensurate with a maximum diameter for the said check valve, the said flow rate control valve and the said safety valve and accordingly is reduced.

### BRIEF EXPLANATION OF THE DRAWINGS

The present invention will better be understood from the following detailed description and the drawings attached hereto showing certain illustrative embodiments of the present invention. In this connection, it should be noted that such embodiments as illustrated in the accompanying drawings are intended in no way to limit the present invention, but to facilitate an explanation and understanding thereof.

In the accompanying drawings:
Fig. 1 is an explanatory view diagrammatically illustrating the state in which the conventional working machine fall preventive valve apparatus has been mounted on a cylinder;
Fig. 2 is a transverse cross sectional view of a working machine fall preventive valve apparatus according to the first embodiment of the present invention;
Fig. 3 is a left hand side view of the fall preventive valve apparatus of Fig. 2;
Fig. 4 is a right hand side view of the fall preventive valve apparatus of Fig. 2;
Fig. 5 is a top plan view of the working machine fall preventive valve apparatus of Fig. 2;
Fig. 6 is a cross sectional view taken along the line VI-VI in Fig. 2;
Fig. 7 is a graph showing a relationship between the distance of displacement of the spool of the flow rate control valve and the pressure of a pilot pressure fluid;
Fig. 8 is a hydraulic circuit diagram showing the state in which the fall preventive valve apparatus according to the first embodiment of the present invention is incorporated into a hydraulic circuit;
Fig. 9 is a transverse cross sectional view of a working machine fall preventive valve apparatus according to the second embodiment of the present invention;
Fig. 10 is a transverse cross sectional view of a working machine fall preventive valve apparatus according to the third embodiment of the present invention;
Fig.11 is a transverse cross sectional view of a working machine fall preventive valve apparatus according to the fourth embodiment of the present invention;
Fig. 12 is a transverse cross sectional view of a working machine fall preventive valve apparatus according to the fifth embodiment of the present invention;
Fig. 13 is a transverse cross sectional view of a working machine fall preventive valve apparatus according to the sixth embodiment of the present invention;
Fig. 14 is a transverse cross sectional view of a working machine fall preventive valve apparatus according to the seventh embodiment of the present invention; and
Fig. 15 is a transverse cross sectional view of a working machine fall preventive valve apparatus according to the eighth embodiment of the present invention.

### BEST MODES FOR CARRYING OUT THE INVENTION

Hereinafter, suitable embodiments of the present invention will be set forth with reference to the accompanying drawings hereof. In this connection, it should be noted that in the description which follows while an explanation will be given of specific detailed constructions with respect to certain various parts in order to ensure a full understanding of the present invention, it will be apparent to a person skilled in the art that the present invention can be carried out within the scope of the accompanying claims without using such specific detailed constructions. Also, in order not to make the invention unclear, it should be noted that a detailed explanation will be omitted with respect to any known construction.

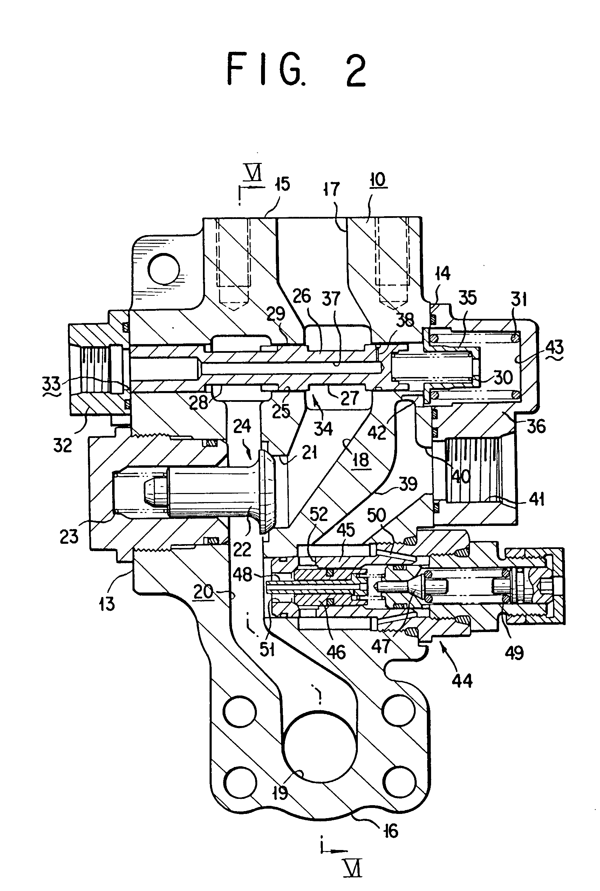

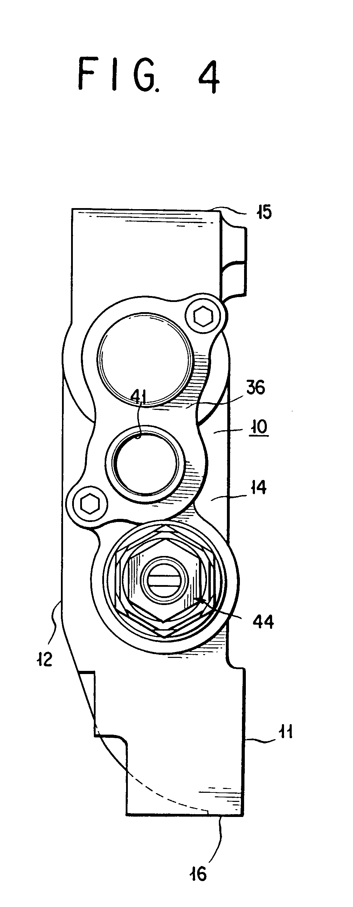

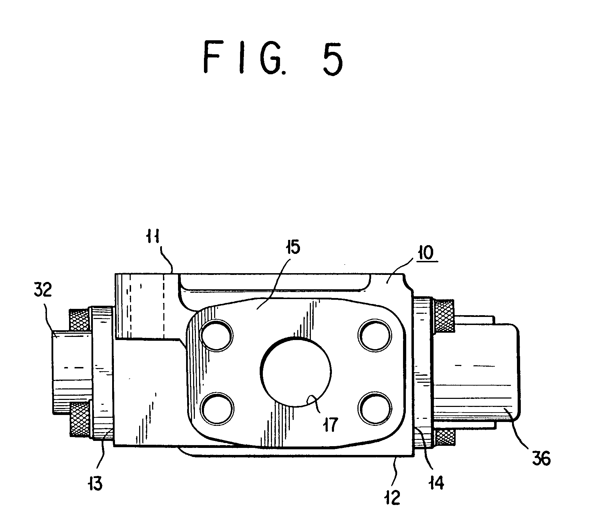

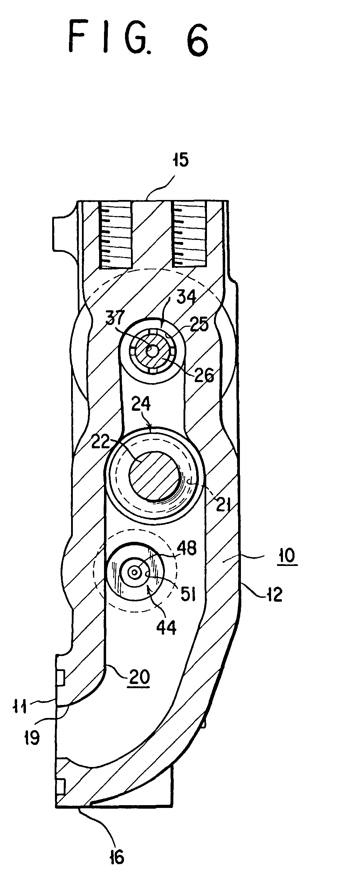

As shown in Figs. 2 to 6, a valve body 10 is formed to be a rectangular solid having a cylinder side mounting surface 11 and an opposite side surface 12 which are opposing to each other, a first and a second surface 13 and 14 which are opposing to each other and a third and a forth surface 15 and 16 which are opposing to each other. The third surface 15 of the valve body 10 is formed with a directional control valve port 17. The valve body 10 is formed therein with a directional control valve side passage 18 that communicates with the said directional control valve port 17. The cylinder side mounting surface 11 of the valve body 10 is formed with a cylinder port 19 which is designed to communicate with a cylinder side passage 20 that is formed in the valve body 10.

The above mentioned directional control valve side passage 18 and the above mentioned cylinder side passage 20 are formed on an identical plane that is in parallel to the above mentioned cylinder side mounting surface 11, and are designed to communicate with each other via a communicating bore 21. The communicating bore 21 is adapted to be open and closed by means of a valve 22. The valve 22 is energized by a spring 23 in a direction in which to normally close the said communicating bore. A check valve 24 is constructed by the said valve 22 and the said communicating bore 21. The check valve 24 serves to allow an operating fluid to flow from the said directional control valve side passage 18 into the said cylinder side passage 20 but to prevent the operating fluid from reversely flowing into the directional control valve side passage 18 from the cylinder side passage 20.

The above mentioned valve body 10 is formed therein with a spool bore 25 which is opening to both the said first surface 13 and the said second surface 14 and which is adapted to have the said directional control valve side passage 18 and the said cylinder side passage 20 communicate with each other. The said spool bore 25 has a spool 26 slidably inserted therein.

The said spool 26 is formed with a first small diameter portion 27 at a position corresponding to the said directional control valve side passage 18 and with a second small diameter portion 28 at a position corresponding to the said cylinder side passage 20. There lies a large diameter portion 29 between the said first and second small diameter portions 27 and 28. The spool 26 is thrusted by a first spring 30 and a second spring 31 leftwards in Fig. 2 so that its one end surface may abut on a plug 32 and is then held there at a position to block a communication between the said directional control valve side passage 18 and the said cylinder side passage 20. A pilot pressure acts on the said one end surface of the spool 26, that is, a pressure receiving portion 33 thereof to energize the said spool 26 rightwards in Fig. 2 against the energizing forces by the said first and second springs 30 and 31. Thus, if the pilot pressure acting on the said pressure receiving portion overcomes the spring forces of the said first and second springs 30 and 31, the spool 26 will be displaced rightwards in Fig. 2 to assume a position at which the said second small diameter portion 28 is opposing to both the said directional control valve side passage 18 and the said cylinder side passage 20 to communicate these two passages with each other. It should be noted here that the rate of flow of the operating fluid flowing between the said directional control valve passage 18 and the said cylinder side passage 20 which communicate with each other via the said second small diameter portion 28 of the spool 26 will vary in accordance with the area of opening of the second small diameter portion 28 to the said directional control valve side passage 18 which area varies in accordance with the amount of displacement of the said spool 26 in the rightward direction in Fig. 2. It follows therefore that a flow control valve 34 is constituted by the said spool bore 25 and the said spool 26.

As shown in Fig. 2, the above mentioned first spring 30 is interposed between the other end surface of the said spool 26 and a movable spring bearing 35. On the other hand, the said second spring 31 is interposed between the said movable spring bearing 35 and a fixed spring box 36. The fixed spring box 35 is bolted to the above mentioned second surface 14 of the valve body 10. Note that the spring force of the said first spring 30 is set to be lower than the spring force of the said second spring 31.

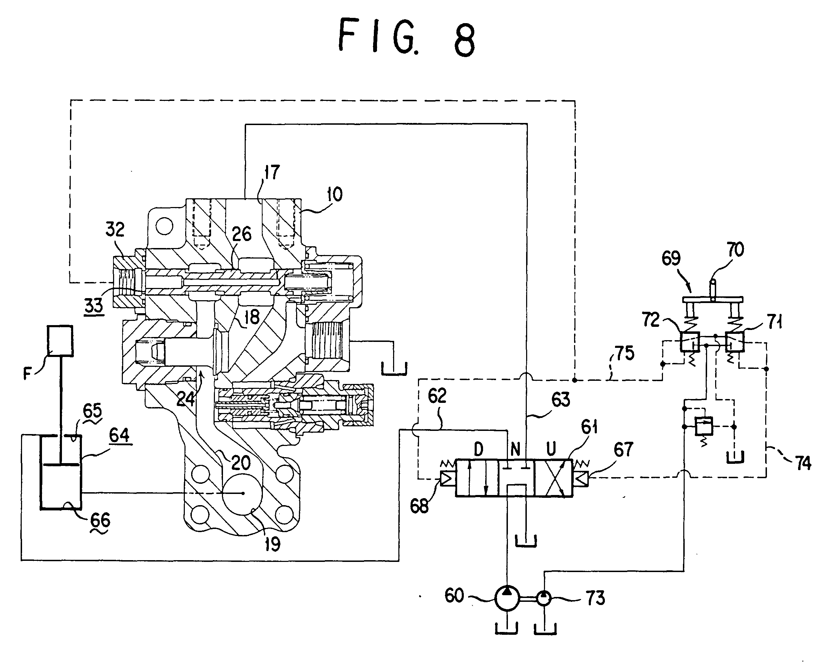

In a construction as mentioned above, if a pilot pressure is applied to the said pressure receiving portion 33 from a pilot pipe line (see Fig. 8) connected to the said plug 32, the said spool 26 will be displaced rightwards against the said first spring 30. The amount of displacement of the said spool is then made proportional to the magnitude of the pilot pressure. If the amount of displacement of the spool 26 exceeds a predetermined value, the said other end surface thereof will come to abut on the said movable spring bearing 35. At the position of displacement of the spool 26 at which its other surface mentioned above abuts on the movable spring 35, the said large diameter portion 29 of the spool 26 will still remain in engagement with the peripheral wall of the said spool bore 25 so as to hold the blocking state between the said directional control valve side passage 18 and the said cylinder side passage 20. As will be set out later, it should be noted that the pilot pressure is a control pressure that is produced when the cylinder is contractively operated to act to discharge the fluid pressure out of the said cylinder side passage 20 into the said directional control valve side passage 18.

If the pilot pressure is further elevated from the above mentioned state, the said spool 26 will be slidably thrusted rightwards against the said second spring 31 so that the said large diameter portion 29 may get out of the said spool bore 25 to allow the said small diameter portion 28 to have the said directional control valve side passage 18 and the said cylinder side passage 20 communicate with each other. At this time, the area of opening of the said second small diameter portion 28 to the said directional control valve side passage 18 will be increased in proportion to the pilot pressure as mentioned above.

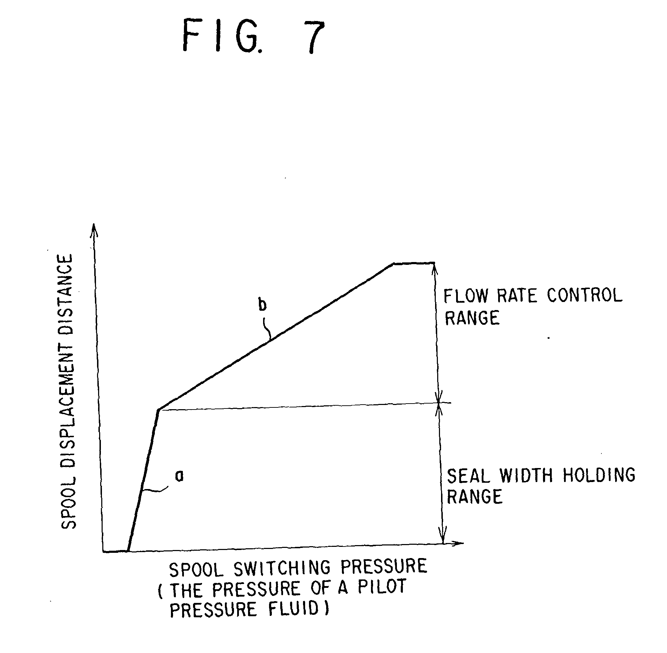

Stated in other words, the characteristic of a displacement of the spool with respect to a change in the pilot pressure assumes, as shown in Fig. 7, two stepped lines having a portion a in which the spool 26 is displaced against the said first spring 30 and a portion b in which it is displaced against the said second spring 31. In the spool displacement characteristic shown in Fig. 7, the portion a represents a seal width holding range while the portion b represents a flow rate control range. For the reason that the seal width (i. e. the length of fitted insertion of the large diameter portion 29 in the spool bore 25) when the pilot pressure is not active can be made large, it is possible to minimize the fluid leakage. Also, in the portion a in which the first spring 30 acts in opposition to the pilot pressure, the capability to set the spring force of the first spring 30 to be relatively small will allow the amount of displacement of the spool 26 to be increased relative to a pressure fluctuation of the pilot pressure. On the other hand, in the portion b in which the spring 31 having a relatively large spring force acts in opposition to the pilot pressure, the amount of displacement of the spool 26 will be reduced relative to a pressure fluctuation of the pilot pressure. Thus, since there is here brought about the ability to increase the length of fitted insertion of the large diameter portion 29 of the spool 26 in the spool bore 25 without largely increasing the entire spool displacement distance, it is possible to reduce the amount of leakage of the operating fluid in a small gap between the spool bore 25 and the spool 26 and yet to control the flow rate at a high precision in the portion b.

As shown in Fig. 2, the said spool 26 is formed with a blind hole 37 in its axial direction and a bore 38 in its radial direction. With such an arrangement, the apparatus is so constructed that when the spool 26 is incorporated in the said valve body 10, an air extraction in the said pilot pipe line may be performed by thrusting the spool 26 rightwards to allow the said bore 38 to be opening into the said fixed spring box 36. More specifically, such an air extraction in the pilot pipe line is made possible owing to the fact that the valve body 10 is formed therein with a tank passage 39 which is designed to communicate through a tank port with a tank side port 41 of the said fixed spring box 36 and to be opening through a communicating port 42 to a spring reception chamber 43 of the fixed spring box 36, when the said pressure receiving portion 33 and the interior of the said plug 32 are allowed to communicate with the said tank side port 41 by thrusting the said spool 26 rightwards to cause the said bore 38 to be opening to the said spring reception chamber 43.

The above mentioned valve body 10 is further provided with a safety valve 44 such that when the fluid pressure within the said cylinder side passage 20 is elevated exceeding a relief pressure, an excessive pressure may be relieved into the said tank passage 39. The said safety valve 44 is constructed of a sleeve 45, a main valve 46, an auxiliary valve 47, a pipe 48 and so forth. The fluid pressure within the said cylinder side passage 20 will act on the said auxiliary valve 47 through the said pipe 48. The auxiliary valve 47 when the fluid pressure introduced therein from the said cylinder side passage exceeds a value commensurate with the mounting weight of the said spring 49 will, in opposition to the spring force of the spring 49, open an auxiliary flowout port 50. As a result, the operating fluid introduced from the said cylinder side passage 20 will be allowed to flow into the said tank passage 39. A differential pressure will be produced thereby around the said main valve 46 to open both a main inlet port 51 and a main flowout port 52 so that the fluid pressure of the cylinder side passage 20 may be relieved into the tank passage 39.

As shown in Fig. 8, the discharge pressure fluid will be delivered to a first pipe conduit 62 and a second pipe conduit 63 through a directional control valve 61. The first pipe conduit 62 is connected to the lowering side chamber 65 of a cylinder 64 whereas the second pipe conduit 63 is connected to the said directional control valve port 17 of the valve body 10. Also, the said cylinder port 19 of the valve body 10 is connected to the elevating side chamber (i. e. the retention pressure producing chamber) of the said cylinder 64.

The above mentioned directional control valve 61 has a neutral position N, an elevating position U and a lowering position D and is normally held at the neutral position N. The directional control valve 61 is switched by the pressure fluid supplied to a first pressure receiving portion 67 to assume the elevating position U and by the pressure fluid supplied to a second pressure receiving portion 68 to assume the lowering position D. It should be noted that a pilot pressure is applied through a pilot valve 69 to the first and second pressure receiving portions 67 and 68.

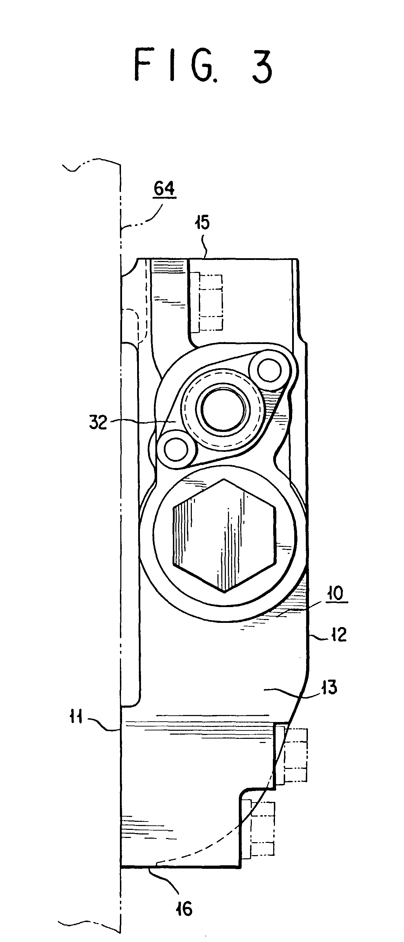

The above mentioned pilot valve 69 is provided with a first and a second reduced pressure valve portion 71 and 72 that can be operated with an operating lever 70. The first and second reduced pressure valve portions 71 and 72 are supplied through their respective inlet sides with the pressure fluid from an auxiliary hydraulic pump 73. A first and a second pilot pipe conduit 74 and 75 which are connected to the respective outlet sides of the first and second reduced pressure valves 71 and 72 are connected to the first and second pressure receiving portions 67 and 68 of the said directional control valve 61, respectively. The second pilot pipe conduit 75 is further connected to the said plug 32 of the valve body 10. Specifically, the said cylinder side mounting surface 11 of the valve body 10 is, as shown in Fig. 3, bolted to the said cylinder 64 so that the said cylinder port 19 may directly communicate with the port of the said cylinder.

An explanation will now be given with respect to the operation of the apparatus described.

The pressure fluid within the elevating side chamber 66 of the cylinder 64 will be allowed to flow into the cylinder side passage 20 from the said cylinder port 19, but will be prevented by the said check valve 24 from flowing into the said directional control side passage 18. Accordingly, if the said second pipe conduit 63 connected to the said directional control valve port 17 happens to be damaged, the retention pressure produced in the said elevating side chamber 66 in accordance with an external load F will not be allowed to flow out of the said second pipe conduit. It follows therefore that the boom, the arm or the bucket in a hydraulic excavating machine is prevented from falling spontaneously.

If a pilot pressure fluid is supplied to the said first pilot pipe conduit 74 by operating the said first reduced pressure valve 71 with the said operating lever 70, the said directional control valve 61 will assume the said elevating position U. Then, the discharge pressure fluid from the said hydraulic pump 60 will be allowed to flow into the said directional control valve port 17 from the said second pipe conduit 63 to open the said check valve 24 so that it may flow into the said elevating side chamber 66 of the cylinder 24 from the said cylinder port 19. Thus, the pressure fluid within the said lowering side chamber 65 will be discharged through the said first pipe conduit 62 and the said directional control valve 61 into a reservoir.

If a pilot pressure fluid is supplied to the said second pilot pipe conduit 75 by operating the said second reduced pressure valve 72 with the said operating lever 70, the said directional control valve 61 will assume the said lowering position D. Then, the discharge pressure fluid from the hydraulic pump 60 will be delivered to the lowering chamber 65 of the cylinder 64.

At the same time, a pilot pressure fluid will be delivered from the said plug 32 of the valve body 10 to the said pressure receiving portion 33 to thrust the said spool 26 rightwards from the state shown, thereby communicating the said directional control valve side passage 18 and the said cylinder side passage 20 with each other. Then, the pressure fluid within the said elevating side chamber 66 of the cylinder 64 will be allowed to flow through the said cylinder port 19 and the said cylinder side passage 20 into the said directional control valve side passage 18 and will be discharged through the said directional control valve port 17 and the directional control valve 61 into the reservoir.

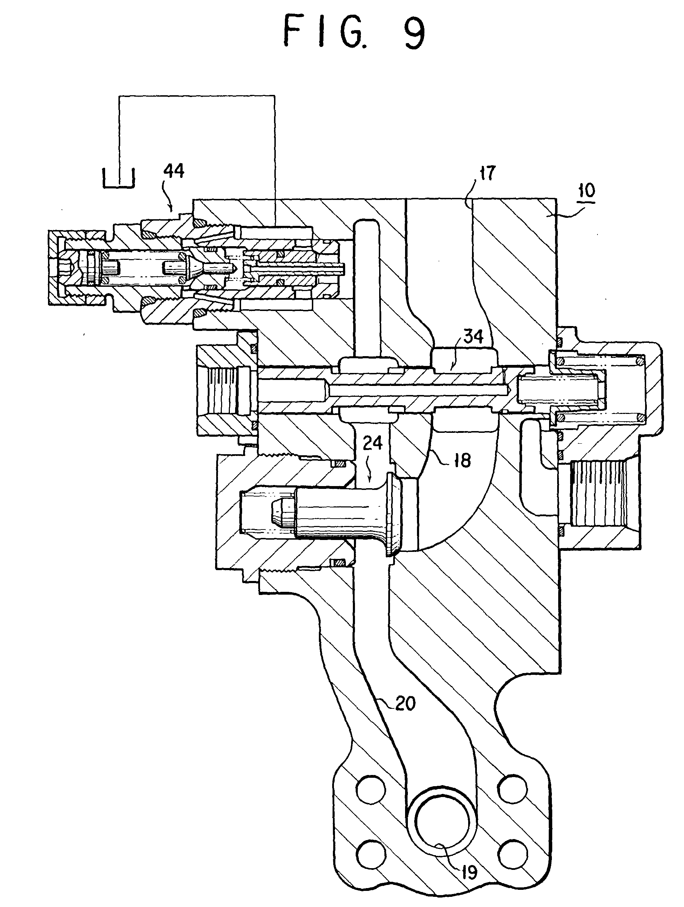

Fig. 9 shows a working machine fall preventive valve apparatus with a hydraulic circuit according to the second embodiment of the present invention. In the present embodiment, the safety valve 44 is disposed at a position that is closer to the directional control valve port 17 than the flow rate control valve 34 in the valve body 10.

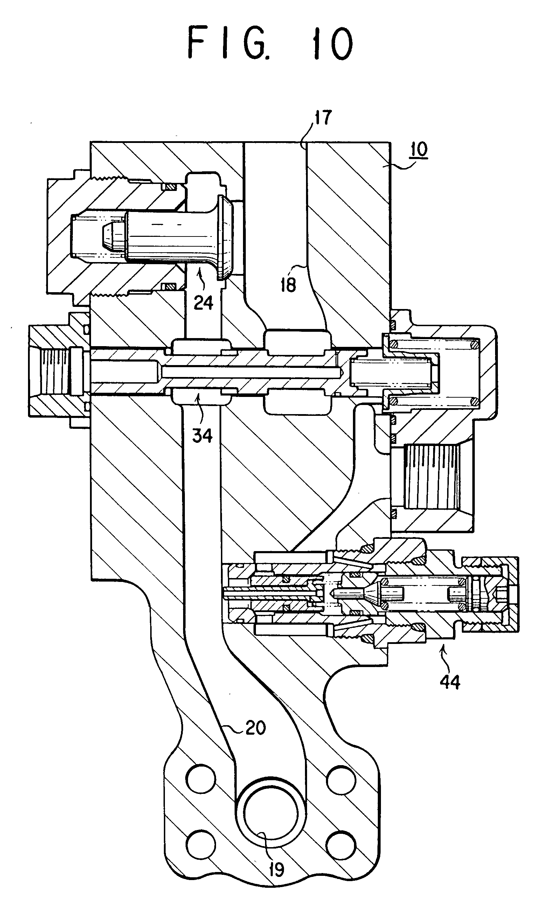

Fig. 10 shows a working machine fall preventive valve apparatus with a hydraulic circuit according to the third embodiment of the present invention. In the present embodiment, the check valve 24 is disposed at a position that is closer to the cylinder port side passage 20 than the flow rate control valve 34 in the valve body 10.

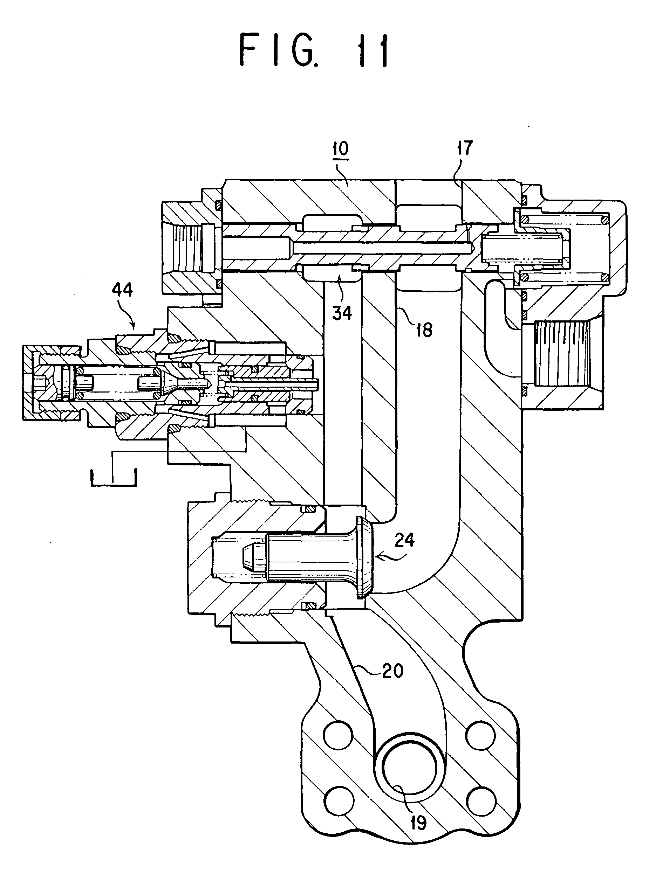

Fig. 11 shows a working machine fall preventive valve apparatus with a hydraulic circuit according to the fourth embodiment of the present invention. In the present embodiment, the check valve 24 is disposed at a position that is closer to the cylinder port 19 than the flow rate control valve 34 in the valve body 10 and a safety valve is disposed between the said check valve 24 and the flow rate control valve 34.

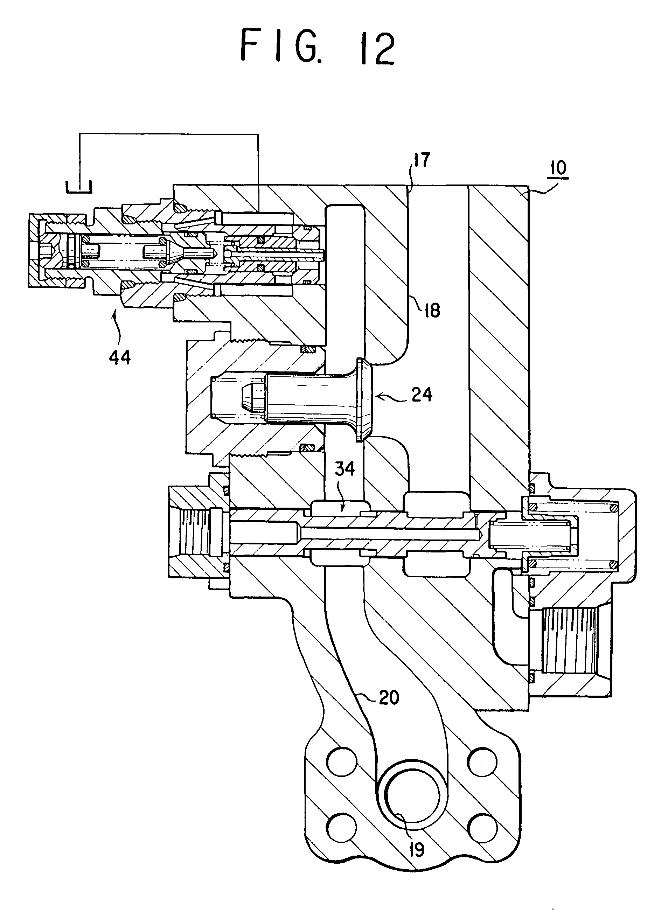

Fig. 12 shows a working machine fall preventive valve apparatus with a hydraulic circuit according to the fifth embodiment of the present invention. In the present embodiment, the safety valve 44 is disposed at a position that is closer to the flow rate control valve port 17 in the valve body 10 and the check valve 24 is disposed between the said safety valve 44 and the flow rate control valve 34.

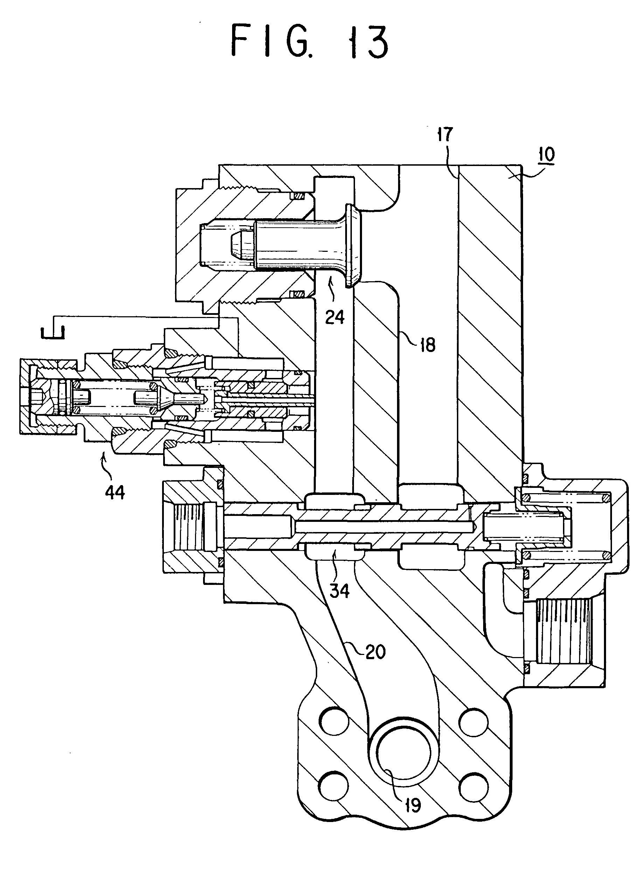

Fig. 13 shows a working machine fall preventive valve apparatus with a hydraulic circuit according to the sixth embodiment of the present invention. In the present embodiment, the check valve 24 is disposed at a position that is closer to the directional control valve port 17 in the valve body 10 and the safety valve 44 is disposed between the said check valve 24 and the flow rate control valve 34.

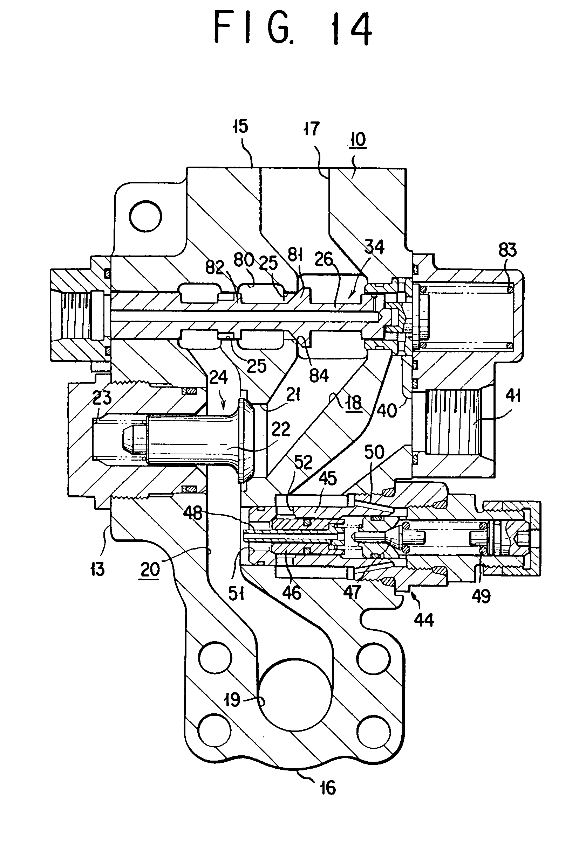

In the foregoing various embodiments, the check valve 24, the flow rate control valve 34 and the safety valve 44 are variously arranged. In the seventh embodiment shown in Fig. 14, the arrangement of these valves is similar to that in Fig. 12, but the flow rate control valve 34 is differently constructed.

More specifically, the said valve body 10 is formed with an intermediate port 80 that is opening to the said spool 25. On the other hand, the spool 26 is formed with a cone seat portion of conical configuration and a large diameter portion 82 to be opened and closed. The spool 26 is designed to be energized by a spring 83 so as to be thrusted leftwards as shown. The said cone seat portion 81 is adapted to abut on a peripheral portion 84 that is opening to the said directional control valve side passage 18 of the spool 26 so that a communication between the directional control valve side passage 18 and the said intermediate port 80 may be blocked. At this instance, a communication between the intermediate port 80 and the said cylinder side passage 20 is blocked.

In such a construction as mentioned above, since the abutting section of the said cone seat portion 81 and the said peripheral portion 84 serves to block a communication between the said directional control valve side passage 18 and the said cylinder side passage 20, there will be no fluid leakage from that section. In addition, not only will there be no leakage of the retention pressure of the cylinder towards the directional control valve side passage 18 but also the sufficiency for the said spring 83 to be singly provided does make the structure simpler than that in Fig. 2.

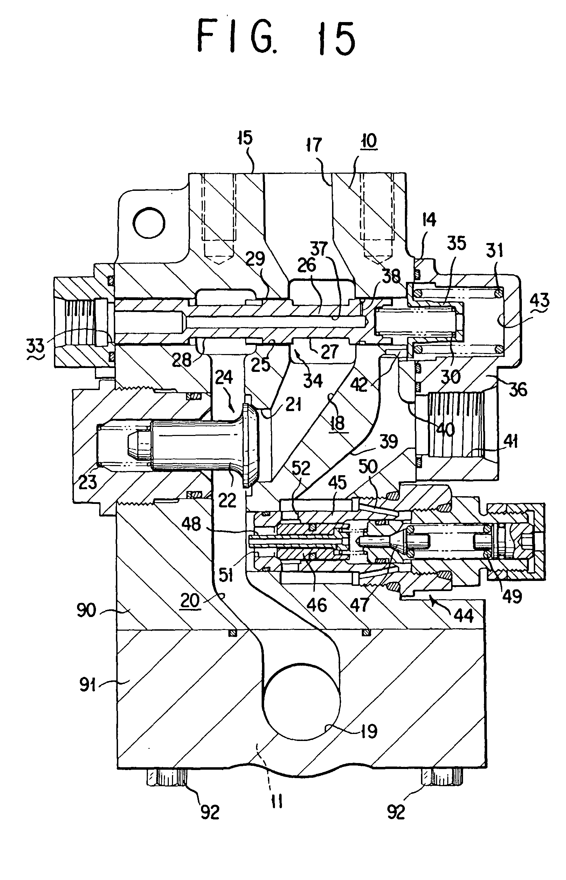

While in the various embodiment shown in the foregoing the valve body 10 is made integral, it is also possible to adopt an arrangement, as in the eighth embodiment shown in Fig. 15, in which a first valve body 90 having mounted thereon the check valve 24, the flow rate control valve 34 and the safety valve 44 is connected by bolts 92 to a second valve body 91 having the cylinder port 19 that is opening to the cylinder side mounting surface 11 to form a modified valve body 10.

According to the present invention, as set forth in the foregoing, it can therefore be seen that by virtue of the fact that a said check valve 24, a said flow rate control valve 34 and a said safety valve 44 are located to lie on an identical level in height, the size in height of mounting a said valve body 10 is made a value that is commensurate with a maximum diameter for the said check valve 24, the said flow rate control valve 34 and the said safety valve 44. Owing to this fact, the size in height of mounting the said valve body 10 is so reduced that if a cylinder is swingingly displaced to a large extent relative to the cylinder mounted body, the said valve body may not collide with the said cylinder mounted body. Accordingly, by simply mounting the said valve body 10 on a said cylinder, it follows that it is made possible to have a sufficiently increased amount of the swinging displacement of the said cylinder and yet to simplify both the entire structure of the apparatus and its mounting operation.

Also, a said flow rate control valve 34 is rendered to provide its operating characteristic that is represented by the relationship of a displacement of a said spool therein with respect to a change in the pilot pressure which relationship assumes two stepped lines. Thus, an initial period of time in which the said spool is displaced is represented by a seal width holding range that is followed by a subsequent spool displacement range that is represented by a flow control range. Accordingly, not only can the fluid leakage be minimized but also a highly accurate flow rate control can be realized by the system.

While the present invention has hereinbefore been described with respect to certain illustrative embodiments thereof, it will readily be appreciated by a person skilled in the art to be obvious that many alterations thereof, omissions therefrom and additions thereto can be made without departing from the scope of the present invention. Accordingly, it should be understood that the present invention is not limited to the specific embodiments thereof set out above, but includes all possible embodiments thereof that can be made within the scope with respect to the features specifically set forth in the appended claims.

## Claims

1. A working machine fall preventive valve apparatus
comprising :
a cylinder side passage (20) communicating with a cylinder port (19) opening to a cylinder side mounting surface (11);
a valve body (10) having a directional control valve side passage (18) which is adapted to communicate with a directional control valve port (17);
a check valve (24) provided in said valve body (10) for preventing a pressure fluid from flowing into said directional control valve side passage (18) from said cylinder side passage (20);
a flow rate control valve (26) provided in said valve body (10) to normally block a communication between said directional control valve side passage (18) and said cylinder side passage (20) and responsive to an external signal for establishing said communication;
and a safety valve (44) provided in said valve body (10) for relieving a pressure in said cylinder side passage (20),
and characterized in that said check valve (24), said flow rate control valve (26) and said safety valve (44) are disposed in a given plane that is substantially in parallel to said cylinder side mounting surface (11).

2. A working machine fall preventive valve apparatus as set forth in claim 1, characterized in that said flow rate control valve comprises a spool (26) fittedly inserted in a spool bore (25) so that it may be slidable therein over a communicating position and a blocking position, that said spool when energized by a plurality of springs (30,31) may be held at said blocking position and that said spool under a pilot fluid pressure may be thrust to said communicating position and in which said springs (30,31) are so set that when said pilot fluid pressure is low said spool may have an increased amount of displacement with respect to a change in said pilot pressure and when said pilot fluid pressure exceeds a given value said spool may have a reduced amount of displacement with respect to a change in said pilot pressure.

3. A working machine fall preventive valve apparatus as set forth in claim 1, characterized in that said flow rate control valve comprises a spool (26) fittedly inserted in a spool bore (25) whereby said spool is formed with a cone seat portion (81) such that the communication between said directional control valve side passage (18) and said cylinder side passage (20) is blocked.

## Patentansprüche

1. Ventileinrichtung zur Verhinderung des Zusammenfallens eines Baumaschinen-Arbeitswerkzeugs mit:
einem Zylinderseitenkanal (20), welcher mit einem Zylindereinlass (19) in Verbindung steht, der in eine Zylinderseitenmontagefläche (11) mündet;
einem Ventilkörper (10) mit einem Richtungssteuerventilseitenkanal (18), der zur Verbindung mit einem Richtungssteuerventileinlass (17) ausgebildet ist;
einem in dem Ventilkörper (10) angeordneten Sperrventil zur Verhinderung eines Flusses von Druckfluid in den Richtungssteuerventilseitenkanal (18) aus dem Zylinderseitenkanal (20);
einem Flussratensteuerventil (23) in dem Ventilkörper (10), welches eine Verbindung zwischen dem Richtungssteuerventilseitenkanal (18) und dem Zylinderseitenkanal (20) normalerweise blockiert und in Abhängigkeit von einem äußeren Signal die Verbindung herstellt, und
einem Sicherheitsventil (44) im Ventilkörper (10) zum Abbauen eines Druck in dem Zylinderseitenkanal (20),
**dadurch gekennzeichnet,**
dass das Absperrventil (24), das Flussratensteuerventil (26) und das Sicherheitsventil (44) in einer vorgegebenen Ebene angeordnet sind, die im wesentlichen parallel zur Zylinderseitenmontagefläche (11) ist.

2. Ventileinrichtung zur Verhinderung des Zusammenfallens eines Baumaschinen-Arbeitswerkzeugs nach Anspruch 1,
**dadurch gekennzeichnet,**
dass das Flussratensteuerventil eine Spule (26) aufweist, die in eine Spulenbohrung (25) eingepasst ist, so dass sie zwischen einer Verbindungsstellung und einer Absperrstellung verschiebbar ist, wobei die Spule durch eine Vielzahl von Federn (30, 31) in ihrer Absperrstellung gehalten ist und unter Einfluss eines Steuerfluiddrucks in die Verbindungsstellung gedrückt ist, wobei die Federn (30, 31) so eingestellt sind,
dass bei einem niedrigen Steuerfluiddruck die Spule eine stärkere Verstellung im Hinblick auf eine Änderung im Steuerdruck, und wenn der Steuerfluiddruck einen vorgegebenen Wert überschreitet, die Spule eine geringere Verstellung im Hinblick auf die Änderung des Steuerdrucks aufweist.

3. Ventileinrichtung zur Verhinderung eines Zusammenfallens eines Baumaschinen-Arbeitswerkzeuges nach Anspruch 1,
**dadurch gekennzeichnet,**
dass das Flussratensteuerventil eine Spule (26) aufweist, die in eine Spulenbohrung (25) eingepasst ist, wobei die Spule einen konischen Sitzbereich (81) aufweist, so dass die Verbindung zwischen dem Richtungssteuerventilseitenkanal (18) und dem Zylinderseitenkanal (20) blockiert ist.

## Revendications

1. Appareil à soupapes empêchant l'écroulement d'un engin de terrassement comprenant :
un passage latéral de vérin (20) communiquant avec un orifice de vérin (19) ouvrant sur une surface de montage latérale de vérin (11);
un corps de soupapes (10) ayant un passage latéral de distributeur (18) qui est adapté pour communiquer avec un orifice de distributeur (17);
une soupape anti-retour (24) prévue dans ledit corps de soupapes (10) pour empêcher l'écoulement d'un fluide sous pression dans ledit passage latéral de distributeur (18) à partir dudit passage latéral de vérin (20);
une soupape de réglage de débit (26) prévue dans ledit corps de soupapes (10) pour arrêter normalement une communication entre ledit passage latéral de distributeur (18) et ledit passage latéral de vérin (20) et sensible à un signal externe pour établir ladite communication;
et une soupape de sûreté (44) prévue dans ledit corps de soupapes (10) pour décharger une pression dans ledit passage latéral de vérin (20);
et caractérisé en ce que ladite soupape anti-retour (24), ladite soupape de réglage de débit (26) et ladite soupape de sûreté (44) sont placées dans un plan donné qui est substantiellement parallèle à ladite surface de montage latérale de vérin (11).

2. Appareil à soupapes empêchant l'écroulement d'un engin de terrassement selon la revendication 1, caractérisé en ce que ladite soupape de réglage de débit comprend un tiroir (26) inséré de manière ajustée dans un alésage de tiroir (25) afin qu'il puisse coulisser à l'intérieur sur une position d'ouverture et une position de fermeture, en ce que ledit tiroir lorsque chargé par une pluralité de ressorts (30, 31) peut être maintenu dans ladite position de fermeture et en ce que ledit tiroir sous une pression pilote du fluide peut être poussé dans ladite position d'ouverture et dans lequel lesdits ressorts (30, 31) sont réglés de telle sorte que lorsque ladite pression pilote de fluide est faible, ledit tiroir peut avoir une grandeur de déplacement accrue en fonction d'une variation dans ladite pression pilote et lorsque ladite pression pilote du fluide excède une valeur donnée, ledit tiroir peut avoir une grandeur de déplacement réduite en fonction d'une variation dans ladite pression pilote.

3. Appareil à soupapes empêchant l'écroulement d'un engin de terrassement selon la revendication 1, caractérisé en ce que ladite soupape de réglage de débit comprend un tiroir (26) inséré de manière ajustée dans un alésage de tiroir (25), ledit tiroir étant formé avec une partie de siège conique (81), de telle sorte que la communication entre ledit passage latéral de distributeur (18) et ledit passage latéral de vérin (20) soit fermée.
